# FASCICULE DE BREVET EUROPEEN

(11) **EP 1 894 645 B1**
(45) Date de publication et mention de la délivrance du brevet: **17.07.2013**
(21) Numéro de dépôt: 07014583.4
(22) Date de dépôt: 25.07.2007
(51) Int. Cl.: B21D 53/26, B60B 27/02

(54) **Procédé de fabrication d'un corps de moyeu pour une roue à rayons et moyeu réalisé selon le procédé**
Herstellungsverfahren einer Nabe für ein Speichenrad und Nabe hergestellt nach diesem Verfahren
Method of manufacturing a hub sheel for a spoke wheel and hub sheel produced using said method

(30) Priorité: 25.08.2006 FR 0607526
(43) Date de publication de la demande: 05.03.2008
(73) Titulaire: MAVIC S.A.S., 74370 Metz-Tessy (FR)
(72) Inventeur: Veux, Jean-Luc, 74150 Rumilly (FR); Ramel, Pascal, 74600 Seynod (FR)

(56) Documents cités:
- EP-A- 0 356 589
- WO-A-99/38712
- CH-A- 314 533
- GB-A- 1 189 730
- US-A- 1 694 779
- US-A- 6 018 869

## Description

L'invention concerne un procédé de fabrication d'un corps de moyeu pour une roue à rayons. Elle concerne également un corps de moyeu réalisé selon le dit procédé, un moyeu et une roue à rayons comprenant un tel corps de moyeu.

De façon usuelle une roue à rayons par exemple pour un vélo comprend une jante périphérique, un moyeu central, et des rayons de liaison entre la jante et le moyeu. Le moyeu a un arbre central qui est prévu pour être fixé au cadre du vélo, et un corps de moyeu monté en rotation autour de l'arbre. Usuellement un corps de moyeu présente deux flasques latéraux réunis par une entretoise de liaison.

Les rayons couramment utilisés pour une roue à rayons sont métalliques ou en matériau composite. On distingue habituellement les rayons droits dont les deux extrémités d'accrochage sont dans l'alignement du corps de rayon, et les rayons coudés qui ont une tête déportée latéralement par un coude du corps de rayon. En règle générale la tête de retenue du rayon est formée par une extrémité de section élargie, ou par un pliage selon une boucle ou une série de segments en zigzag. D'autres types de rayons existent, par exemple un fil métallique tendu entre le moyeu et la jante.

Pour une roue à rayons usuelle, les rayons sont répartis selon deux nappes. Le moyeu comprend un corps de moyeu avec deux flasques latéraux réunis par une portion centrale, chaque nappe de rayons reliant la jante à un des flasques du corps de moyeu.

Pour des rayons droits, les flasques d'accrochage ont une forme de bulbe avec des fentes axiales comme cela est décrit par exemple dans la demande de brevet FR 2 739 059, ou présentent des plots radiaux en saillie avec des logements ou des saignées comme cela est le cas par exemple dans les demandes de brevet FR 2 640 203 en relation avec les figures 3 à 10, ou encore FR 2 794 063. Il est également connu, pour ce type de rayon, d'usiner dans la masse les deux flasques pour former des logements de réception des têtes de rayons, ceci est décrit par exemple dans la demande de brevet FR 2 736 869, ou encore US 5,626,401.

Pour des rayons coudés, les flasques d'accrochage sont en règle générale des disques munis de perforations dans lesquelles les têtes de rayon sont retenues. Les demandes de brevet EP 004 155 et EP 039 021 décrivent de tels moyeux.

En règle générale le moyeu est réalisé en métal léger, notamment un alliage d'aluminium ou de titane et il est mis en forme par usinage.

Plusieurs techniques existent pour réaliser un corps de moyeu. Une première technique consiste à usiner un barreau cylindrique plein. Cette technique convient particulièrement pour des petites séries. Elle demande peu d'investissement d'outillage. Par contre il y a beaucoup de perte de matière, et l'usinage est long et coûteux.

Selon une seconde technique on réalise dans un premier temps une ébauche matricée à chaud ou frappée à froid qui présente grossièrement la forme du corps de moyeu, puis on usine l'ébauche à sa forme finale. Cette technique permet un gain de matière important. Cependant un ré-usinage complet de l'ébauche est nécessaire car sa forme et ses dimensions ne sont pas très précises. Il faut également un outillage important. Par conséquent cette technique est adaptée pour des moyennes ou des grandes séries.

Selon une troisième technique l'ébauche est moulée en coquille ou en moulage sous pression. Cette technique assez grossière ne convient pas pour des alliages légers ayant des propriétés mécaniques élevées. De plus, certains alliages compatibles avec cette technique de moulage ne sont pas adaptés à des traitements de finition, comme l'anodisation, ce qui peut être gênant.

Selon une autre technique telle que décrite dans le document le plus proche de la technique WO 99/38712, on emboutit, à l'aide de mandrins expansibles, les extrémités élargies du moyeu.

Il existe encore une technique qui consiste à réaliser le corps de moyeu en trois parties assemblées entre elles, à savoir deux flasques et une entretoise tubulaire centrale qui réunit les deux flasques. Un tel mode de construction est décrit dans la demande de brevet FR 2 802 853. Il est avantageux car il est possible de réaliser les flasques et l'entretoise dans des matières différentes ou dans des alliages de qualité différente. En outre chaque élément peut être usiné séparément. Selon ce qui est décrit dans le document cité, les flasques sont réalisés par moulage ou usinés dans la masse.

Aucune de ces techniques ne permet cependant la réalisation de formes ouvragées et variées de petites dimensions notamment pour l'ancrage des rayons au stade de l'ébauche. Les rayons métalliques usuels ont en section un diamètre de l'ordre de 2 millimètres. Dans ces conditions les logements ou les saignées qui permettent l'accrochage des rayons sont usinés ou découpés ultérieurement lors d'une phase de reprise généralement par fraisage.

En outre toutes ces techniques font appel à plusieurs modes d'usinage distincts, globalement des opérations de tournage et de fraisage ou de perçage.

Par ailleurs les techniques d'usinage actuelles limitent les formes des trous/logements d'accrochage des rayons et ne permettent pas n'importe quelle géométrie de ces trous, ce qui peut être gênant pour la conception des rayons/moyeux.

Compte tenu de cet état de la technique un but de l'invention est de proposer un procédé de fabrication d'un corps de moyeu pour une roue à rayons qui est amélioré en ce qu'il est réalisé avec un nombre réduit d'opérations d'usinage.

Un autre but de l'invention est de proposer un procédé de fabrication d'un corps de moyeu qui est amélioré en ce qu'il est plus économique.

Un autre but de l'invention est de proposer un procédé de fabrication qui est amélioré en ce qu'il permet de diminuer la quantité de matière enlevée au cours de l'usinage.

Un autre but de l'invention est de proposer un procédé de fabrication d'un corps de moyeu qui est amélioré en ce qu'il permet la réalisation de formes variées, précises et de petites dimensions.

Ces buts et d'autres buts et avantages qui apparaîtront au cours de la description qui va suivre sont atteints par le procédé de l'invention.

Ce procédé s'applique à la fabrication d'un corps de moyeu, le corps de moyeu ayant un axe central de révolution et comprenant deux flasques d'accrochage des rayons réunis par une entretoise tubulaire de liaison, les flasques ayant un orifice central pour le passage de l'arbre du moyeu et des orifices ou découpes périphériques pour l'accrochage des rayons.

Le procédé est caractérisé en ce qu'il comprend une étape de réalisation d'au moins un élément du corps du moyeu à partir d'un profilé qui présente au moins une découpe centrale cylindrique et en ce qu'on réalise le dit profilé par une technique de filage au travers d'une filière.

Le corps de moyeu selon l'invention est caractérisé en ce qu'il est obtenu par la mise en oeuvre du procédé. Le moyeu et la roue sont caractérisés par le fait qu'ils comprennent un corps de moyeu obtenu par la mise en oeuvre du procédé.

L'invention sera mieux comprise en se référant à la description ci-dessous et aux dessins en annexe qui en font partie intégrante.
Les figures 1 à 3 illustrent l'art antérieur.
La figure 4 montre un profilé ajouré obtenu selon un premier mode de mise en oeuvre de l'invention.
La figure 5 illustre le découpage d'un flasque.
La figure 6 représente un corps de moyeu réalisé à partir du profilé de la figure 4.
La figure 7 est une vue en section d'un profilé selon un autre mode de mise en oeuvre de l'invention.
La figure 8 montre une vue en perspective d'un flasque obtenu à partir du profilé de la figure 7.
La figure 9 est une vue en section par un plan radial médian du flasque de la figure 8.
La figure 10 est une vue partielle en coupe qui illustre l'accrochage d'un rayon.
La figure 11 montre un moyeu complet.
La figure 12 est relative à une variante de construction du moyeu.
La figure 13 montre un profilé selon un autre mode de mise en oeuvre de l'invention.
La figure 14 représente un corps de moyeu obtenu à partir du profilé de la figure 13.
La figure 15 illustre un mode d'assemblage particulier des flasques et de l'entretoise.
La figure 16 représente un profilé qui permet de réaliser les flasques de la figure précédente.
La figure 17 montre un profilé selon un autre mode de mise en oeuvre de l'invention.
La figure 18 représente partiellement un rayon prévu pour la forme du profilé précédent.
La figure 19 montre une variante de construction du rayon de la figure 18.
La figure 20 représente un corps de moyeu prévu pour le rayon de la figure 19.

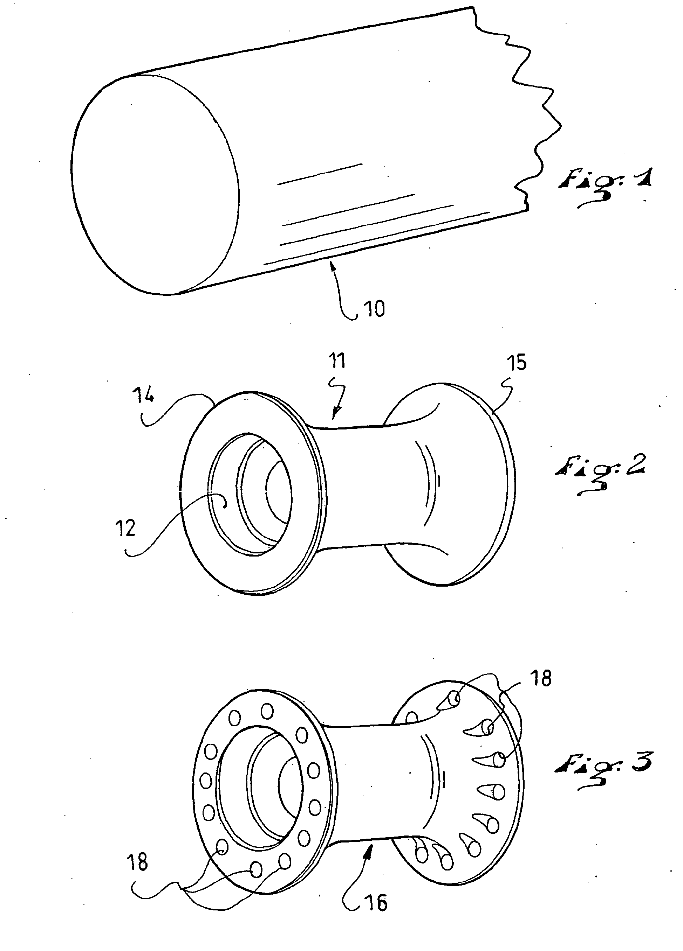

Dans les figures 1 à 3 on a illustré les différentes étapes de réalisation d'un corps de moyeu selon l'art antérieur.

Ainsi la figure 1 représente un barreau 10 qui est par exemple un barreau plein en alliage d'aluminium obtenu par extrusion.

La figure 2 montre une ébauche 11 du corps de moyeu qui est obtenue après une première phase d'usinage. Les opérations réalisées consistent en des opérations de tournage qui donnent à l'ébauche 11 sa forme extérieure et ses dimensions finales relativement à l'axe de rotation du moyeu, et une opération de tronçonnage du barreau 11. Cette opération de tronçonnage peut être réalisée avant ou après le tournage. Egalement on réalise au cours de ces opérations un alésage médian 12 qui sera traversé ultérieurement par l'arbre du moyeu, le cas échéant avec des chambres qui formeront des logements pour les roulements.

On peut remarquer que dans le cas présent une quantité importante de matière est enlevée à l'usinage, principalement dans la zone entre les flasques 14 et 15 d'accrochage des rayons, et au niveau de l'alésage 12. Si au lieu d'un barreau on était parti d'une ébauche brute, on aurait économisé une quantité notoire de matière dans la zone entre les flasques 14 et 15. Une quantité importante de matière peut être également économisée si on réalise le moyeu en trois parties, c'est-à-dire deux flasques usinés dans le barreau et une entretoise centrale usinée ou découpée dans un autre profilé.

La figure 3 représente le corps de moyeu final 16 après la phase de reprise. Au cours de cette phase, les flasques sont percés avec des trous 18 prévus pour l'accrochage des rayons. De façon optionnelle les trous peuvent être chanfreinés pour aménager le siège de la tête de rayon et améliorer son assise. Après ces opérations le corps de moyeu peut subir des opérations de finition, par exemple grenaillage et le cas échéant anodisation.

Parmi les opérations qui ont été décrites, l'usinage de la forme extérieure, du logement médian, et le cas échéant, le tronçonnage peuvent être réalisés sur une machine de tournage ou une machine équivalente où la pièce à usiner est entraînée en rotation autour de son axe de révolution. Par contre les trous 18 sont réalisés à part avec un outillage particulier et notamment à l'aide de fraises spécifiques et cette opération engendre un temps de fabrication propre qui s'ajoute au temps de tournage.

L'idée de base de l'invention est de réaliser un élément du corps de moyeu à savoir au moins l'un des flasques, et le cas échéant l'entretoise ou encore le corps de moyeu entier non pas à partir d'un barreau plein, mais d'un profilé ajouré, c'est-à-dire qui présente dans sa structure une ou des découpes longitudinales débouchant ou non à la surface externe du barreau. La forme de ces découpes, en ce qui concerne les flasques, est prévue pour qu'à l'issue d'une phase de tournage ou de sciage destinée notamment à découper le flasque à partir du profilé et éventuellement à réaliser des butées ainsi qu'on le verra plus loin, les découpes forment des orifices ou des encoches pour l'accrochage des rayons. Ces orifices ou encoches étaient créées auparavant lors de l'opération de reprise à l'aide d'outils spéciaux. Avec la solution selon l'invention, les découpes obtenues à l'aide du profilé ajouré sont suffisamment précises et n'ont pas besoin d'être reprises en tant que telles pour constituer les orifices d'accrochage.

En effet, la technique de filage qui consiste à pousser un alliage à l'état pâteux (500°C environ) au travers d'une filière permet de réaliser des profilés pouvant avoir des formes complexes, avec des dimensions précises, et à un coût économique. Les découpes sont obtenues par des aiguilles placées dans la filière qui constituent un obstacle dans le flux de matière traversant la filière. Le profilé obtenu peut mesurer plusieurs mètres. Cette technique est particulièrement bien adaptée aux alliages d'aluminium de la série 6000 (aluminium + silicium + magnésium) qui peuvent être durcis en réalisant une trempe directement en sortie de presse lors de l'opération de filage, suivi d'un revenu complémentaire au four.

Dans le profilé on peut réaliser l'un et/ou l'autre flasque ou bien le corps de moyeu d'une seule pièce. Lorsque l'entretoise est rapportée, il est possible de la réaliser dans un profilé obtenu par filage, tronçonné et le cas échéant usiné par une technique de tournage, comme le profilé utilisé pour les flasques. L'avantage d'une entretoise rapportée est un gain de matière important et la possibilité de réaliser les flasques et l'entretoise dans des matières différentes, notamment un alliage différent.

Le sciage (tronçonnage) et le tournage sont des modes d'usinage particulièrement économiques qui nécessitent un outillage standard et donc peu coûteux. Ils peuvent être facilement mis en oeuvre et le cas échéant automatisés, c'est-à-dire que les corps de moyeu ou les flasques peuvent être réalisés à l'unité sur un tour traditionnel ou en série sur une machine de décolletage à partir du profilé en barre. Le décolletage est considéré ici comme un mode particulier de tournage.

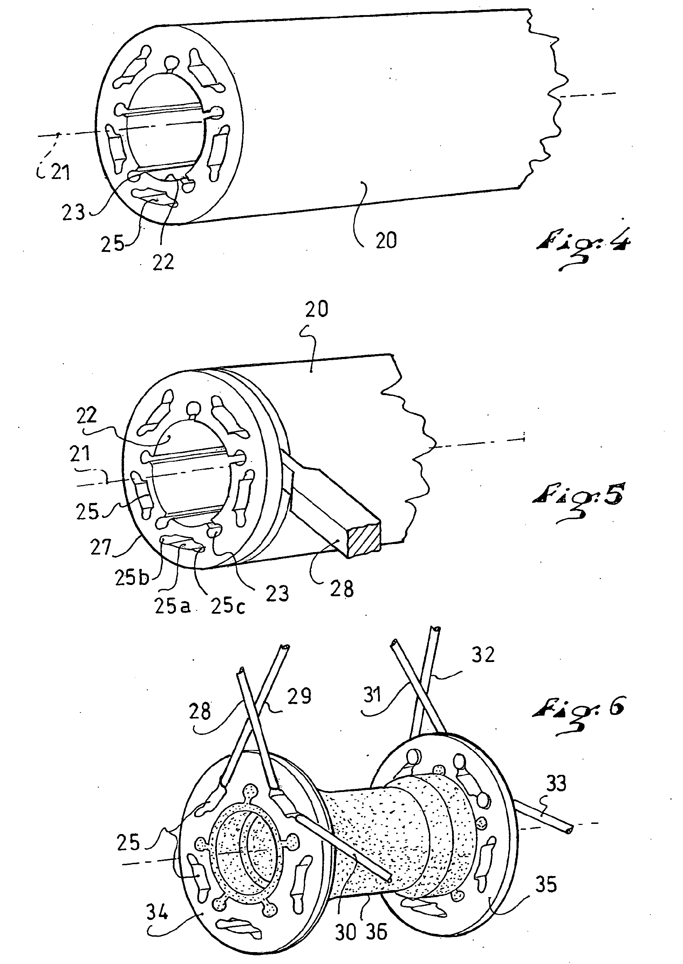

Les figures 4 à 6 illustrent un premier mode de mise en oeuvre de l'invention.

La figure 4 représente un profilé 20 ajouré conformément à l'invention. Selon le mode de réalisation illustré, le profilé 20 a une forme générale de révolution autour d'un axe 21. Il présente une découpe centrale 22 cylindrique qui est centrée sur l'axe 21. Cette découpe a des extensions radiales 23, dont la fonction sera décrite ultérieurement. Egalement, le profilé 20 présente dans la zone entre la découpe centrale et la paroi externe du profilé des découpes périphériques fermées 25. Ces découpes 25 sont centrées sur l'axe 21. Elles sont fermées, c'est-à-dire qu'elles ne débouchent pas sur l'intérieur ou l'extérieur du profilé. Ces découpes ont en section une forme de boutonnière double, avec une portion médiale 25a de forme sensiblement rectangulaire ou en arc de cercle qui présente une dimension transversale suffisamment grande pour permettre l'introduction d'une tête de rayon coudé, et vers chaque extrémité une portion 25b, 25c sensiblement circulaire de plus petite dimension. Le nombre de ces découpes 25 est égal à la moitié du nombre de rayons de la nappe. Il n'est pas limitatif.

Le profilé 20 est réalisé par filage. La découpe centrale 22 avec ses extensions latérales 23 et les découpes fermées 25 sont obtenues par des aiguilles placées dans la filière de filage.

Comme le montre la figure 5, le profilé 20 est prévu pour être découpé en disques, tels que le disque 27, à l'aide d'un outil de coupe que l'on a schématisé en 28, chaque disque 27 constituant un flasque. Cette opération est de préférence réalisée sur une machine de tournage, ce qui présente l'avantage de permettre le cas échéant de dresser l'une ou l'autre des faces du disque de façon à lui donner une épaisseur variable selon une direction radiale. Cependant on peut aussi réaliser la découpe des disques sur un banc de sciage. Dans ce cas les disques ont chacun une épaisseur constante.

Les découpes fermées 25 deviennent des orifices d'accrochage de rayon qui ont la forme de boutonnière double, c'est-à-dire qui sont aptes à accueillir chacun deux rayons 28, 29, 30, 31, 32, 33 (cf. figure 6). Cette solution est préférée, car elle permet en fait de réduire le nombre d'aiguilles sur la filière relativement au nombre de rayons. L'épaisseur des disques est déterminée au niveau des découpes 25 en fonction des dimensions du coude formé par les rayons, de façon à permettre l'accrochage des rayons dans les portions de plus petite dimension, comme l'illustre la figure 6 pour les rayons 28 à 33. Les rayons peuvent être du type croisé comme cela est représenté dans la figure 6, ou du type radial. La forme de boutonnière double 25 n'est pas limitative, les orifices d'accrochage peuvent avoir la forme d'une boutonnière simple ou encore d'un trou traversant.

A l'issue du tronçonnage, chaque disque 27 est muni de sa découpe centrale 22 et de ses orifices d'accrochage de rayons, et peut constituer un flasque 34 sans usinage de reprise. Il faut noter que la forme et les dimensions de ces orifices obtenus par l'opération de filage sont suffisamment précises pour justement ne pas nécessiter d'opération de reprise. Le corps de moyeu fini est représenté dans la figure 6. Il comprend deux flasques 34 et 35 qui sont semblables au disque 27 de la figure 5, et une entretoise de liaison 36. L'entretoise 36 est, dans l'exemple représenté, rapportée par une technique de surmoulage. Par exemple, les deux disques 34 et 35 sont placés dans un moule, et de la matière plastique éventuellement chargée de fibres est injectée de façon à former l'entretoise 36. Cette matière pénètre notamment dans la découpe ou orifice central 22 de chaque flasque 34, 35 et dans les extensions radiales 23 de cet orifice 22. Ceci assure le centrage relatif des flasques 34, 35 sur l'axe de révolution du moyeu, et également cela rend les flasques solidaires en rotation avec une indexation angulaire pour respecter l'alternance des rayons au niveau de la jante. Ainsi le corps de moyeu est apte à transmettre ou supporter un couple de transmission ou un couple de freinage. Le nombre et la forme des extensions radiales 23 ne sont pas limitatifs. D'autres modes de liaison entre les flasques peuvent également convenir. Notamment l'entretoise de liaison 36 pourrait être un tronçon de tube découpé dans un tube métallique ou en matière composite obtenue par filage, qui est ensuite assemblé aux disques par collage ou tout autre moyen.

Egalement, un profilé comme le profilé 20 mais sans les extensions radiales 23 de son orifice central 22 peut permettre la réalisation d'un corps de moyeu monobloc uniquement par des opérations de tournage. En effet, en usinant un tel profilé dans la masse on peut réaliser les deux disques d'extrémité formant les flasques 34, 35 et l'entretoise de liaison 36, le tout d'un seul tenant sur un tour ou une machine de décolletage. Cependant une quantité importante de matière est à enlever au niveau de l'entretoise pour réduire le diamètre du profilé.

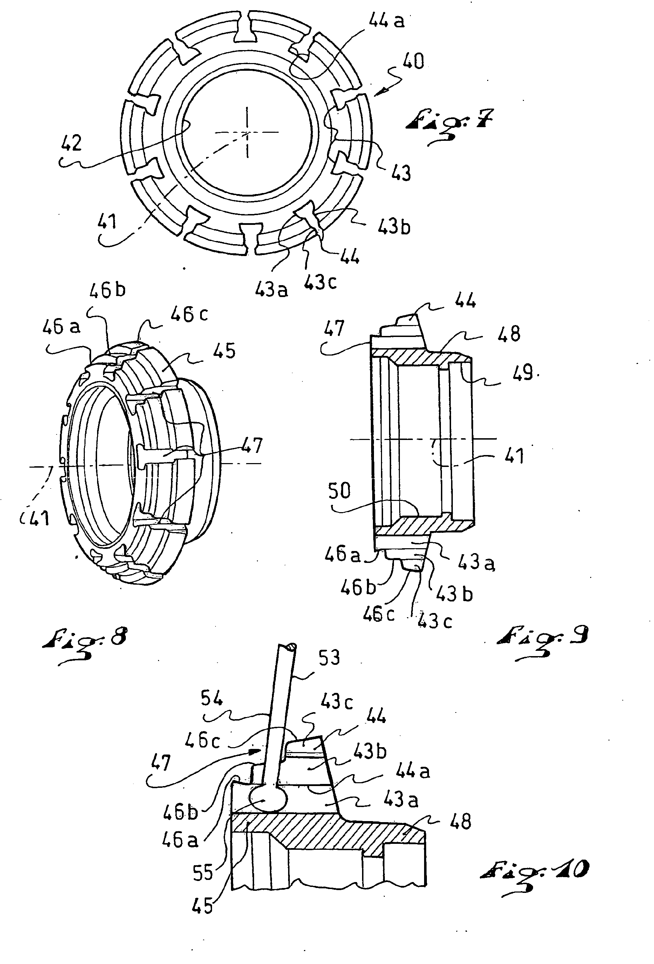

Les figures 7 à 11 illustrent un autre mode de mise en oeuvre de l'invention qui est plus particulièrement adapté à un rayon droit 53 disposé de façon radiale. Un tel rayon 53 présente de façon connue une tête élargie 55 qui est dans le prolongement d'un corps longiligne 54 (cf. figure 10).

La figure 7 montre la section d'un profilé 40 qui est issu de filage et qui a subi le cas échéant un traitement thermique pour améliorer ses propriétés mécaniques. La forme générale de profilé 40 est centrée sur l'axe de révolution 41. En particulier, le profilé présente une découpe centrale 42 fermée, et des découpes périphériques 43. Les découpes périphériques sont ouvertes et débouchent à la périphérie du profilé. Ce mode de réalisation des découpes est préféré, mais il n'est pas limitatif, et les découpes 43 pourraient être fermées.

Les découpes 43 sont réalisées selon trois étages respectivement inférieur 43a, intermédiaire 43b et supérieur 43c, dont les dimensions en section vont en diminuant de l'intérieur vers l'extérieur du profilé. L'étage inférieur 43a a des dimensions en section qui le rendent apte à accueillir la tête élargie 55 d'un rayon 53. L'étage intermédiaire 43b a une largeur qui le rend apte à être traversé par le corps 54 d'un rayon 53, tout en interdisant le passage de sa tête 55. La largeur de l'étage supérieur 43c est inférieure au diamètre du corps 54 de rayon pour interdire le passage du corps de rayon. Ce qui importe en fait c'est qu'au niveau de cet étage 43c les deux bords 44 de la découpe soient suffisamment resserrés pour faire office de butée axiale relativement au corps 54 de rayon (cf. figure 10). A la limite les deux bords 44 pourraient se rejoindre, mais au filage cela rendrait plus difficile la réalisation des étages inférieurs qui formeraient alors des découpes fermées.

Le nombre des découpes autour de l'axe 41 est lié au nombre de rayons, il n'est pas limitatif.

La figure 8 représente un flasque 45 obtenu par usinage du profilé 40 sur une portion de sa longueur. Comme précédemment l'usinage consiste en un tournage et un tronçonnage. Le tronçonnage peut en fait être réalisé sur la machine de tournage. A ce titre il est assimilé à une opération de tournage. L'usinage est réalisé sur l'extérieur du profilé pour mettre en forme les orifices d'accrochage 47 des rayons à partir des découpes 43, et le cas échéant sur l'intérieur de la découpe centrale 42 pour aménager par exemple le logement d'un roulement et le manchon de réception de l'entretoise.

Selon le mode de réalisation illustré, l'usinage sur l'extérieur est réalisé selon des gradins circulaires de diamètres croissants, décalés axialement en relation avec les étages 43a, 43b, 43c des orifices. Le gradin 46a le plus proche de l'axe 41 (et donc de diamètre le plus petit) et de l'extrémité latérale du corps de moyeu monte jusqu'au niveau de l'étage intermédiaire 43b. Sa fonction est principalement esthétique. Le gradin intermédiaire 46b crée une ouverture radiale vers l'extérieur de l'étage intermédiaire 43b, et le gradin 46c ayant le diamètre le plus important est situé à une hauteur suffisante pour former une butée axiale au-delà de l'étage 43b, comme cela apparaîtra plus clairement dans la suite.

A l'opposé des gradins, le flasque 45 présente un manchon 48 avec un alésage intérieur 49 pour l'entretoise de liaison qui sera décrite ultérieurement. Egalement, le flasque présente intérieurement un alésage 50 prévu pour y loger la cage externe d'un roulement de liaison avec l'arbre 52 du moyeu.

La figure 10 illustre le montage d'un rayon 53 dans un orifice d'accrochage 47 du flasque. Le rayon 53 est un rayon droit avec un corps 54 et une tête élargie 55. La tête élargie 55 est prévue pour être engagée dans l'étage inférieur 43a de l'orifice 47 selon une direction axiale. La tête est retenue radialement par les parois 44a qui délimitent l'étage intermédiaire 43b. Le corps 54 du rayon traverse le gradin intermédiaire 43b, cependant il est retenu axialement par les parois 44 qui délimitent l'étage supérieur 43c. Une fois sous tension, le rayon est ainsi immobilisé radialement et axialement. Comme cela a été dit précédemment, l'étage 43c pourrait être remplacé par une portion de paroi pleine. Le flasque 45 est donc obtenu à partir du profilé 40 par de simples opérations de tournage pour la réalisation des gradins 46a, 46b, 46c et du manchon 48, ainsi que de tronçonnage pour détacher le flasque de la barre du profilé 40.

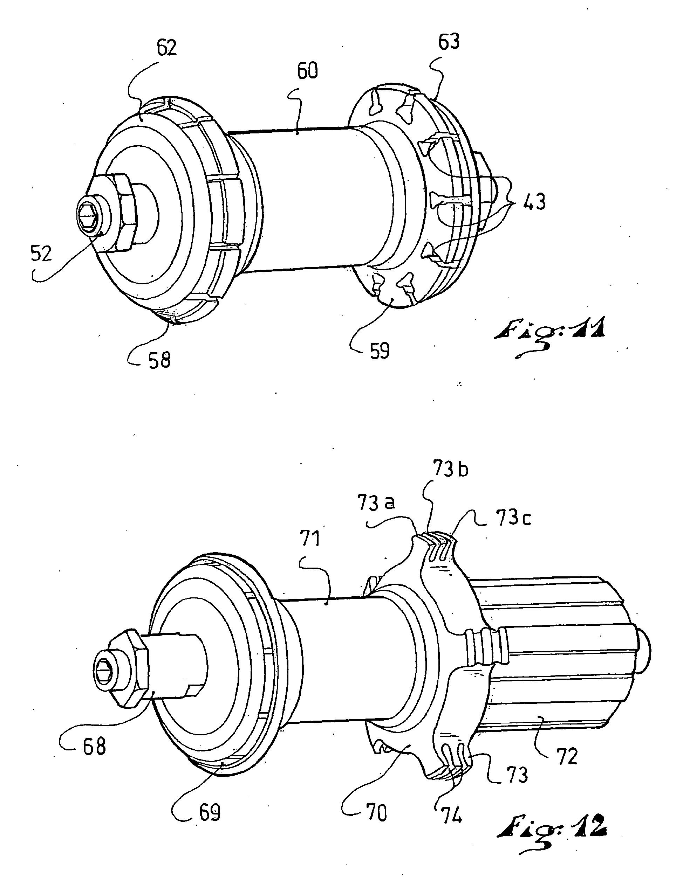

La figure 11 montre un moyeu complet. Ce moyeu a deux flasques latéraux 58, 59 semblables au flasque 45 précédemment décrit. Les deux flasques 58, 59 sont réunis par une entretoise de liaison 60. L'entretoise est réalisée en tout matériau approprié, notamment en matière plastique, en matière composite ou en alliage d'aluminium. L'entretoise peut ainsi être réalisée à partir d'un profilé obtenu par filage selon le même mode de réalisation que le profilé pour les flasques. L'entretoise est assemblée aux flasques par tout moyen approprié, notamment par collage, ou soudure, notamment soudure par friction. Ces modes d'assemblage permettent d'indexer angulairement les flasques l'un par rapport à l'autre, de façon à permettre l'alternance des rayons au niveau de la jante. De préférence, comme cela est représenté, des coupelles 62 et 63 sont montées à chacune des extrémités du corps de moyeu. Elles sont par exemples engagées sur le gradin inférieur 46a, seuls les gradins 46b, 46c étant visibles. Ces coupelles obturent l'étage inférieur des différents orifices emprisonnant ainsi les têtes de rayon après leur mise en place. Elles ont également une fonction esthétique.

Le moyeu qui vient d'être décrit est prévu pour des rayons radiaux, ceci n'est cependant pas limitatif. En effet, en inclinant la direction générale des découpes 43 de part et d'autre de la direction radiale, il est possible d'incliner les rayons et donc de réaliser un moyeu pour une roue à rayons croisés.

La figure 12 représente un moyeu pour une roue arrière. De façon classique ce moyeu comprend un arbre central 68, un corps de moyeu avec deux flasques 69 et 70 réunis par une entretoise 71. Du côté du flasque 70, le moyeu se prolonge par un corps de roue libre 72 prévu pour recevoir les pignons de transmission. Ceci est connu. D'autres constructions sont également possibles.

Le flasque 69 est semblable au flasque 45 décrit relativement à la figure 8. Une différence toutefois est que les découpes sont fermées au niveau de l'étage supérieur ce qui permet une esthétique différente. On ne voit donc que la découpe du gradin intermédiaire 46b.

Le flasque 70 est du type à plots, c'est-à-dire qu'il présente une pluralité de plots 73 en saillie, chaque plot est traversé par deux saignées radiales 74 qui sont délimitées par des portions de paroi 73a, 73b, 73c orientées parallèlement à un plan radial. Les saignées 74 de chaque plot sont prévues pour recevoir deux rayons droits tête-bêche. Dans ces conditions les rayons sont tangents au flasque et ils sont croisés. Le nombre des plots n'est pas limitatif. Un tel mode de construction d'un flasque est connu. Les deux flasques 69 et 70 sont réunis par l'entretoise 71.

Plusieurs techniques de fabrication permettent de réaliser le moyeu de la figure 12. En premier lieu au moins un des flasques est réalisé conformément à ce qui a été décrit précédemment, en liaison avec les figures 7 à 10, à partir d'un profilé ajouré. De préférence, au moins le flasque 69 est réalisé de cette façon.

Le flasque 70 quant à lui est réalisé selon une technique traditionnelle d'usinage. Cependant il peut aussi être fabriqué conformément à ce qui a été décrit précédemment.

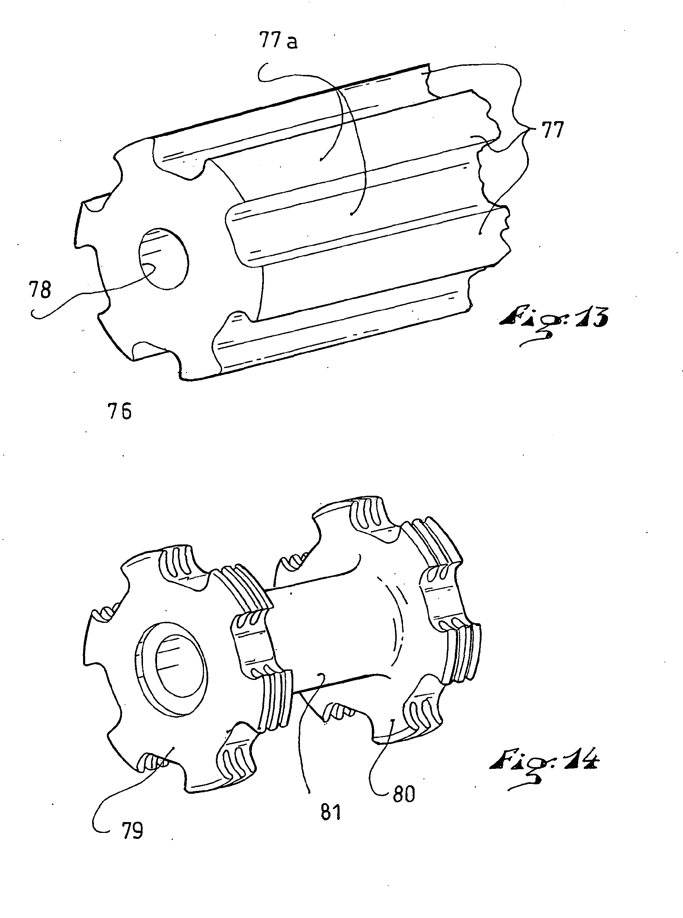

Pour illustrer cela la figure 13 montre un profilé 76 à partir duquel un flasque tel que le flasque 70 peut être réalisé uniquement par des opérations de tournage. Le profilé 76 présente sur l'extérieur des nervures radiales continues 77 séparées par des encoches 77a. Ces nervures deviendront les plots 75 après usinage des saignées 74 et tronçonnage du profilé. Comme les saignées 74 sont orientées dans un plan radial, elles peuvent être réalisées dans le profilé ajouré 76 par tournage sans difficulté particulière. Dans la partie centrale, le profilé présente une découpe centrale 78 pour la réalisation de l'alésage central du flasque.

Plusieurs techniques de construction peuvent aussi convenir pour l'entretoise. Comme précédemment elle peut être réalisée en métal à partir d'un profilé obtenu par filage qui est ensuite tronçonné et le cas échéant usiné. Ou encore elle peut être en matière plastique ou en matière composite.

Le moyeu arrière est soumis à de fortes contraintes en torsion. De ce fait une solution avantageuse consiste à réaliser l'entretoise d'une seule pièce avec un des flasques, de préférence le flasque 70 et à l'assembler à l'autre flasque par collage ou soudage ou tout autre moyen approprié.

D'autres modes de construction d'un moyeu pour roue arrière sont aussi possibles. En particulier le moyeu pourrait avoir deux flasques construits comme le flasque 69, dans ce cas où la roue aurait deux nappes de rayons droits, ou deux flasques construits comme le flasque 70, dans ce cas la roue aurait deux nappes de rayons croisés.

La figure 14 illustre un autre mode de construction d'un corps de moyeu à partir du profilé précédent 76. Ce corps de moyeu peut convenir pour une roue avant ou une roue arrière.

Les deux flasques 79, 80 et l'entretoise centrale 81 du corps de moyeu sont réalisés en une seule pièce en usinant par tournage un tronçon de profilé 76. Les flasques sont du type à plots pour rayons croisés tangents, comme le flasque 70 précédent. Comme ils sont issus des mêmes nervures, les plots des deux flasques 79 et 80 sont deux à deux dans un même plan radial. Pour réaliser l'alternance des rayons au niveau de la jante il faut que les plots soient décalés angulairement. Ce décalage est réalisé par exemple en soumettant l'entretoise 81 à une déformation irréversible de torsion autour de son axe de révolution.

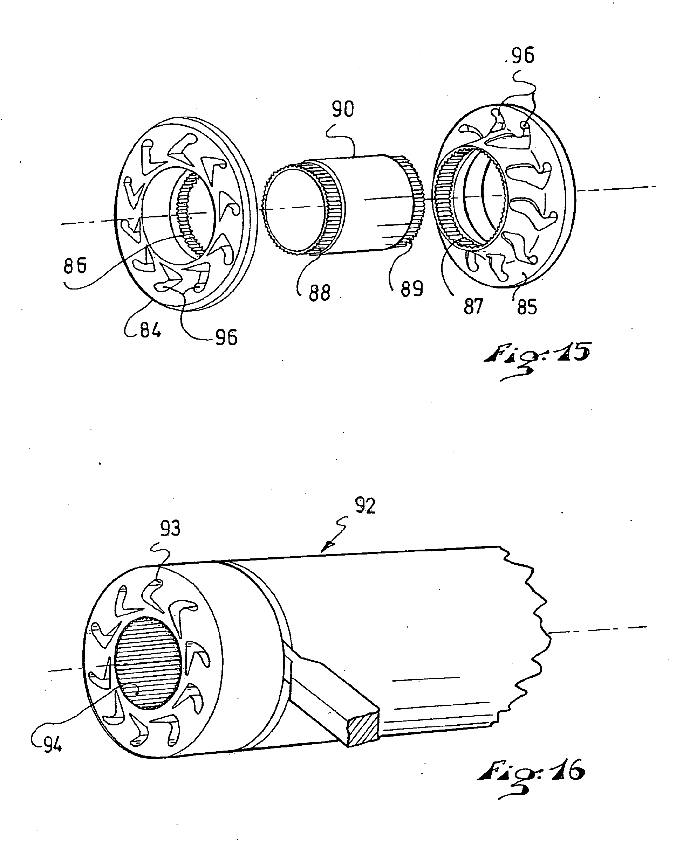

La figure 15 illustre un autre mode d'assemblage entre les flasques et l'entretoise qui peut être obtenu par la mise en oeuvre de l'invention. L'accouplement en rotation est ici réalisé par la coopération de cannelures complémentaires du flasque et de l'entretoise. Pour l'un ou l'autre des éléments, les cannelures peuvent être issues de l'opération de filage du profilé ajouré. Ou bien les cannelures sont réalisées au cours de l'opération de tournage à l'aide d'une molette cannelée qui provoque localement le refoulement de la matière.

Ainsi, selon le mode de réalisation illustré, les flasques 84 et 85 présentent chacun une portion cannelée intérieure, respectivement 86, 87. Ces portions cannelées sont prévues pour être emboîtées sur des portions cannelées complémentaires 88, 89 aux extrémités de l'entretoise 90.

Comme l'illustre la figure 16, les portions cannelées 86 et 87 des flasques sont issues du profilé ajouré 92 à partir duquel les flasques sont réalisés.

Le profilé 92 est ajouré avec des découpes périphériques 93 qui seront décrites ultérieurement et une découpe centrale 94 dont la paroi est cannelée de façon continue. Lors de l'usinage du profilé 92, une partie de la découpe centrale 94 est usinée pour former par exemple un alésage de roulement, et une partie est conservée pour former la portion cannelée 86.

Les portions 88 et 89 de l'entretoise 90 sont réalisées sur une machine de cannelage traditionnelle. Elles peuvent aussi être obtenues à partir d'un profilé filé et cannelé extérieurement sur toute sa longueur. Un tronçon de ce profilé est usiné dans sa portion médiane pour former une partie lisse entre les deux portions cannelées d'extrémité. D'autres modes de fabrication peuvent aussi convenir.

La solidarisation entre l'entretoise et les flasques est réalisée par tout moyen approprié, et notamment par collage.

Le mode d'assemblage qui vient d'être décrit peut être appliqué au mode de construction précédent d'un moyeu arrière. Il peut être appliqué pour l'assemblage de l'entretoise avec l'un des flasques, la liaison entre l'autre flasque et l'entretoise étant réalisée de façon différente.

Les figures 15 et 16 illustrent une autre particularité de l'invention. Les flasques 84 et 85 présentent en effet des orifices 96 qui ont une forme en V particulière qu'on ne pourrait pas obtenir par un usinage traditionnel à un coût économiquement raisonnable et qui peut être obtenue très facilement avec le procédé de filage selon l'invention. Par exemple, comme cela est représenté, le contour des orifices 96 présente des angles vifs, un angle obtus et un angle droit. On peut avoir d'autres formes, par exemple avec une fente étroite ou avec un angle vif aigu ou obtus ou encore une forme de goutte qui ne peut pas être obtenue par des techniques d'usinage traditionnelles. De telles formes peuvent être souhaitées par le constructeur pour des raisons techniques ou esthétiques.

Il est facile de réaliser les formes de découpe longitudinale les plus diverses au moyen de la filière de filage, en effet les aiguilles qui donnent la forme des découpes sont usinées depuis l'extérieur. A l'inverse, un usinage traditionnel ne permet pas d'obtenir toutes les formes d'orifice qu'on peut souhaiter, par exemple une forme à angle vif, ou une fente étroite car il faut respecter l'arrondi minimum du rayon de la fraise.

L'invention peut s'appliquer à la construction d'un moyeu prévu pour d'autres types de rayons que les rayons à tête élargie.

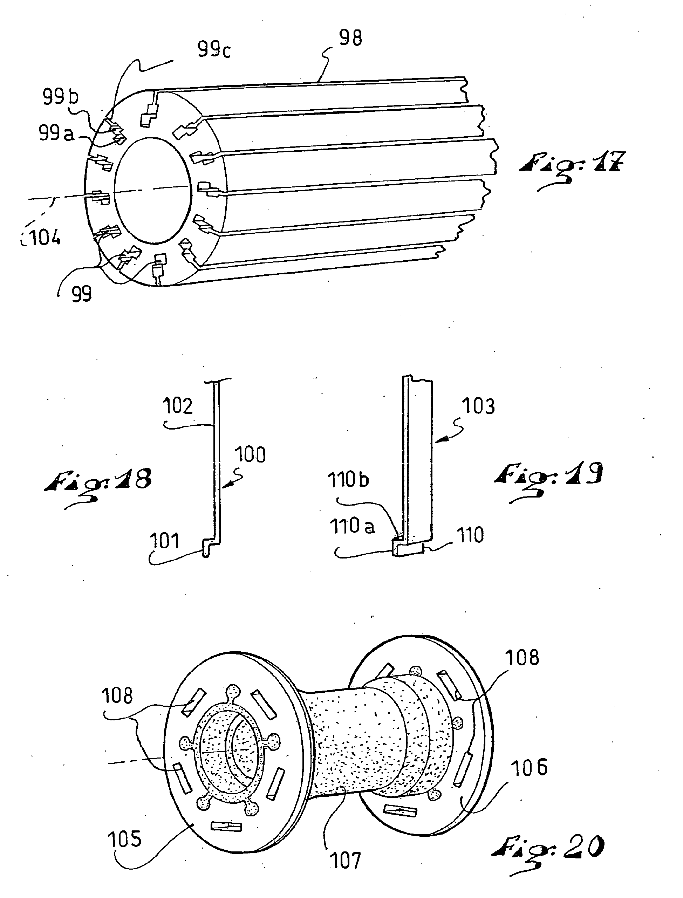

Pour illustrer cela, la figure 17 montre un profilé ajouré 98 qui a des découpes longilignes 99. Chaque découpe a en section une forme en zigzag. Ces découpes sont prévues pour coopérer avec le rayon 100 qui est représenté partiellement dans la figure 18. Ce rayon a un corps 102 filiforme et une tête 101 qui est formée par une succession de segments en zigzag en continuité avec le corps. Le profilé 98 est conçu et usiné à la manière du profilé 40 décrit relativement à la figure 7. Les découpes 99 sont réparties selon des étages. L'étage inférieur 99a, le plus proche de l'axe 104 du profilé présente en section une forme de "L" retourné, il est prévu pour recevoir la tête 101 du rayon. L'étage intermédiaire 99b est prévu pour le passage du corps de rayon 102. L'étage supérieur 99c est une fente de largeur inférieure au diamètre du corps 102 pour former une butée axiale pour le corps du rayon. Comme précédemment, la fente de l'étage 99c est facultative, et la matière à ce niveau pourrait être continue. L'usinage du flasque est réalisé par gradins successifs comme pour le flasque 45 de la figure 8.

Au lieu d'être filiforme, le corps pourrait avoir une section aplatie comme le rayon 103 de la figure 19. Un moyeu prévu pour être associé à un tel rayon est représenté en figure 20. Il est construit à la manière du moyeu qui a été décrit en relation avec la figure 6 avec deux flasques 105 et 106 formés par des disques et une entretoise 107 de liaison. Les flasques 105 et 106 ont des orifices 108 de section rectangulaire dans lesquels la tête 110 des rayons 103 est introduite jusqu'au segment 110b.

Le procédé qui vient d'être décrit permet de réaliser un corps de moyeu avec un nombre réduit d'opérations. En effet les flasques et le cas échéant l'entretoise sont réalisés par des opérations de tournage ou de tronçonnage, il n'y a plus d'opération de reprise.

Il permet d'économiser de la matière du fait que le profilé est issu du filage avec des découpes pour réception des rayons, ou ouverture centrale déjà déterminées et n'ayant pas besoin d'être reprises.

Il est également plus économique étant donnés la réduction du nombre d'opérations et le gain de matière. Egalement il est possible de réaliser les flasques ou le corps de moyeu complet, et le cas échéant l'entretoise en série sur une machine de décolletage.

Enfin il permet de réaliser des orifices avec des formes particulières qu'on ne pourrait pas obtenir facilement par un usinage traditionnel.

Naturellement la description de la présente invention n'est pas limitative, et on pourrait adopter des variantes ou d'autres mises en oeuvres sans pour autant sortir du cadre de l'invention.

En particulier les constructions qui ont été décrites pour un mode de réalisation particulier de l'invention peuvent être appliqués aux autres modes de réalisation seuls ou en combinaison avec d'autres modes de construction.

Egalement, il va de soi qu'après l'usinage chaque flasque ou le cas échéant le corps de moyeu entier peut subir une opération de finition pour améliorer son état de surface telle qu'un grenaillage, une anodisation ou autre.

Des orifices pourraient aussi être présents dans les flasques pour d'autres usages que l'accrochage des rayons. Par exemple on peut avoir des orifices pour le montage d'un disque de freinage. Dans ce cas des découpes correspondant à ces orifices sont prévues dans le profilé ajouré.

Enfin, ce procédé est particulièrement adapté aux alliages d'aluminium et notamment aux alliages de la famille 6000 (aluminium + silicium + magnésium) qui peuvent être durcis en réalisant une trempe directement en sortie de presse lors de l'opération de filage, suivi d'un revenu complémentaire au four.

## Revendications

1. Procédé de fabrication d'un corps de moyeu pour une roue à rayons, le corps de moyeu ayant un axe central de révolution (21, 41) et comprenant deux flasques d'accrochage des rayons (34, 35, 45, 58, 59, 69, 70, 79, 80, 84, 85, 105, 106) réunis par une entretoise tubulaire de liaison (36, 60, 71, 81, 90, 107), les flasques ayant un orifice central pour le passage de l'arbre du moyeu et des orifices ou découpes périphériques pour l'accrochage des rayons, **caractérisé en ce qu'**il comprend une
étape de réalisation d'au moins un élément du corps du moyeu à partir d'un profilé (20,40,76,98) qui présente au moins une découpe centrale cylindrique (22,23) et **en ce qu'**on réalise le dit
profilé par une technique de filage au travers d'une filière, ledit profilé comportant des découpes (25, 43, 93, 99, 108) pour réception des rayons ou ayant des nervures radiales continues (77).

2. Procédé selon la revendication 1, **caractérisé en ce que** la partie de moyeu obtenu à partie du profilé est un flasque.

3. Procédé selon la revendication 1, **caractérisé en ce que** la partie de moyeu obtenu à partie du profilé est l'entretoise.

4. Procédé selon l'une des revendications 1 à 3, **caractérisé par le fait qu'**on usine au moins un flasque et l'entretoise d'une seule pièce dans le profilé.

5. Procédé selon l'une des revendications 1 à 4, **caractérisé par le fait qu'**on réalise au moins l'un des l'éléments que sont un flasque (84, 85) et une entretoise (90) à partir d'un profilé (92) ayant une surface cannelée (94) continue que l'on usine de façon à conserver une portion cannelée (86, 87, 88, 89) sur une partie seulement de la longueur de l'élément.

6. Procédé selon l'une des revendications 1 à 5, **caractérisé par le fait qu'**on réalise un profilé (20) ayant une découpe centrale (22, 23) et des découpes périphériques fermées (25).

7. Procédé selon l'une des revendications 1, 2 et 4 à 6, **caractérisé par le fait qu'**on usine le profilé ajouré selon des disques (27, 34, 35).

8. Procédé selon l'une des revendications 1, 2 et 4 à 6, **caractérisé par le fait qu'**on réalise un profilé ajouré (40, 98) ayant des découpes (43, 99) étagées selon une succession d'étages (43a, 43b, 43c, 99a, 99b, 99c).

9. Procédé selon la revendication 8, **caractérisé par le fait qu'**on usine le profilé selon des gradins (46a, 46b, 46c) en relation avec les étages (43a, 43b, 43c) des découpes (43).

10. Procédé selon l'une des revendications 1 à 7, **caractérisé par le fait qu'**on réalise un profilé (76) ayant des nervures radiales continues (77).

11. Procédé selon la revendication 10, **caractérisé par le fait qu'**on usine les nervures (77) selon des plots (73) et qu'on réalise dans les plots des saignées orientées dans un plan radial.

12. Procédé selon l'une des revendications 1 à 11, **caractérisé par le fait qu'**on réalise un profilé (92) avec des découpes (93) dont le contour présente au moins un angle vif.

13. Procédé selon l'une des revendications 1 à 11, **caractérisé par le fait qu'**on réalise un profilé ajouré (98) avec des découpes périphériques ayant une forme en zigzag (99).

14. Procédé selon l'une des revendications 1 à 11, **caractérisé par le fait qu'**on réalise un profilé ayant des découpes périphériques de section rectangulaire.

15. Procédé selon l'une quelconque des revendications 1 à 14, **caractérisé par le fait que** le profilé est obtenu à partir d'un alliage d'aluminium.

16. Corps de moyeu pour une roue à rayons ayant un axe central de révolution et comprenant deux flasques d'accrochage des rayons (34, 35, 45, 58, 59, 69, 70, 79, 80, 84, 85, 105, 106) réunis par une entretoise de liaison tubulaire (36, 60, 71, 81, 90, 107), les flasques ayant un orifice central pour le passage de l'arbre du moyeu et des orifices ou encoches périphériques pour l'accrochage des rayons, **caractérisé par le fait qu'**il est obtenu par la mise en oeuvre du procédé selon l'une quelconques des revendications précédentes.

17. Corps de moyeu selon la revendication 16, **caractérisé par le fait que** les flasques sont des disques (34, 35, 105, 106) ayant des orifices (25, 108) en forme de boutonnière double ou de rectangle.

18. Corps de moyeu selon la revendication 16, **caractérisé par le fait que** l'orifice central (22) présente des extensions radiales (23) et que de la matière de l'entretoise centrale (36) est présente dans l'orifice central et les extensions radiales.

19. Corps de moyeu selon la revendication 16, **caractérisé par le fait que** les orifices périphériques (47, 99) d'au moins un flasque (45) ont des étages (43a, 43b, 43c, 99a, 99b, 99c) dont les dimensions en section diminuent de l'intérieur vers l'extérieur, et que le flasque présente au moins un gradin (46b) qui crée radialement une ouverture dans l'étage intermédiaire (43b).

20. Corps de moyeu selon la revendication 16, **caractérisé par le fait que** l'entretoise (71) est monobloc avec un flasque (70) et qu'elle est assemblée à l'autre flasque (69) par un assemblage.

21. Corps de moyeu selon la revendication 16, **caractérisé par le fait que** les orifices d'accrochage de rayons (96) ont un contour avec un angle vif.

22. Corps de moyeu selon la revendication 16, **caractérisé par le fait que** les orifices d'accrochage de rayon ont un contour avec une fente étroite.

23. Moyeu pour une roue à rayon, comprenant un arbre et un corps de moyeu selon l'une quelconque des revendications 16 à 21, monté en rotation libre autour de l'arbre.

24. Roue à rayons comprenant une jante périphérique, un moyeu central et des rayons de liaison entre le moyeu et la jante, **caractérisé par le fait que** le moyeu présente un corps de moyeu selon l'une quelconque des revendications 15 à 22.

## Patentansprüche

1. Verfahren zur Herstellung eines Nabenkörpers für ein Speichenrad, wobei der Nabenkörper eine zentrale Umdrehungsachse (21, 41) aufweist und zwei Befestigungsflansche für die Speichen (34, 35, 45, 58, 59, 69, 70, 79, 80, 84, 85, 105, 106) umfasst, die durch eine röhrenförmige Verbindungsstrebe (36, 60, 71, 81, 90, 107) verbunden sind, wobei die Flansche eine zentrale Öffnung für den Durchgang der Welle der Nabe und Umfangsöffnungen oder -ausschnitte für die Befestigung der Speichen aufweisen, **dadurch gekennzeichnet, dass** es einen Schritt der Herstellung mindestens eines Elements des Nabenkörpers aus einem Profil (20, 40, 76, 98), das mindestens einen zentralen zylindrischen Ausschnitt (22, 23) aufweist, umfasst, und dass das Profil durch eine Technik des Strangpressens durch eine Ziehdüse hergestellt wird, wobei das Profil Ausschnitte (25, 43, 93, 99, 108) für die Aufnahme der Speichen umfasst oder durchgehende radiale Rippen (77) aufweist.

2. Verfahren nach Anspruch 1, **dadurch gekennzeichnet, dass** der Nabenteil, der aus dem Profil erhalten wird, ein Flansch ist.

3. Verfahren nach Anspruch 1, **dadurch gekennzeichnet, dass** der Nabenteil, der aus dem Profil erhalten wird, die Querstrebe ist.

4. Verfahren nach einem der Ansprüche 1 bis 3, **dadurch gekennzeichnet, dass** mindestens ein Flansch und die Querstrebe in einem Stück aus dem Profil herausgearbeitet werden.

5. Verfahren nach einem der Ansprüche 1 bis 4, **dadurch gekennzeichnet, dass** mindestens eines der Elemente, die ein Flansch (84, 85) und eine Querstrebe (90) sind, aus einem Profil (92) mit einer durchgehenden gerillten Oberfläche (94) hergestellt wird, die derart bearbeitet wird, dass ein gerillter Abschnitt (86, 87, 88, 89) nur auf einem Teil der Länge des Elements beibehalten wird.

6. Verfahren nach einem der Ansprüche 1 bis 5, **dadurch gekennzeichnet, dass** ein Profil (20) mit einem zentralen Ausschnitt (22, 23) und geschlossenen Umfangsausschnitten (25) hergestellt wird.

7. Verfahren nach einem der Ansprüche 1, 2 und 4 bis 6, **dadurch gekennzeichnet, dass** das durchbrochene Profil in Scheiben (27, 34, 35) bearbeitet wird.

8. Verfahren nach einem der Ansprüche 1, 2 und 4 bis 6, **dadurch gekennzeichnet, dass** ein durchbrochenes Profil (40, 98) hergestellt wird, das Ausschnitte (43, 99) aufweist, die in aufeinanderfolgenden Stufen (43a, 43b, 43c, 99a, 99b, 99c) gestuft sind.

9. Verfahren nach Anspruch 8, **dadurch gekennzeichnet, dass** das Profil in Absätzen (46a, 46b, 46c) in Verbindung mit den Stufen (43a, 43b, 43c) der Ausschnitte (43) bearbeitet wird.

10. Verfahren nach einem der Ansprüche 1 bis 7, **dadurch gekennzeichnet, dass** ein Profil (76) mit durchgehenden radialen Rippen (77) hergestellt wird.

11. Verfahren nach Anspruch 10, **dadurch gekennzeichnet, dass** die Rippen (77) in Blöcken (73) bearbeitet werden und dass in den Blöcken Einschnitte eingearbeitet werden, die in eine Radialebene ausgerichtet sind.

12. Verfahren nach einem der Ansprüche 1 bis 11, **dadurch gekennzeichnet, dass** ein Profil (92) mit Ausschnitten (93) hergestellt wird, deren Kontur mindestens einen spitzen Winkel aufweist.

13. Verfahren nach einem der Ansprüche 1 bis 11, **dadurch gekennzeichnet, dass** ein durchbrochenes Profil (98) mit Umfangsausschnitten in Zickzack-Form (99) hergestellt wird.

14. Verfahren nach einem der Ansprüche 1 bis 11, **dadurch gekennzeichnet, dass** ein Profil mit Umfangsausschnitten mit rechteckigem Querschnitt hergestellt wird.

15. Verfahren nach einem der Ansprüche 1 bis 14, **dadurch gekennzeichnet, dass** das Profil aus einer Aluminiumlegierung hergestellt wird.

16. Nabenkörper für ein Speichenrad mit einer zentralen Umdrehungsachse und umfassend zwei Befestigungsflansche für die Speichen (34, 35, 45, 58, 59, 69, 70, 79, 80, 84, 85, 105, 106), die durch eine röhrenförmige Verbindungsstrebe (36, 60, 71, 81, 90, 107) verbunden sind, wobei die Flansche eine zentrale Öffnung für den Durchgang der Welle der Nabe und Umfangsöffnungen oder -ausschnitte für die Befestigung der Speichen aufweisen, **dadurch gekennzeichnet, dass** er durch den Einsatz des Verfahrens nach einem der vorhergehenden Ansprüche hergestellt wird.

17. Nabenkörper nach Anspruch 16, **dadurch gekennzeichnet, dass** die Flansche Scheiben (34, 35, 105, 106) mit Öffnungen (25, 108) in Form einer länglichen Aussparung oder eines Rechtecks sind.

18. Nabenkörper nach Anspruch 16, **dadurch gekennzeichnet, dass** die zentrale Öffnung (22) radiale Erweiterungen (23) aufweist und dass das Material der zentralen Querstrebe (36) in der zentralen Öffnung und den radialen Erweiterungen vorhanden ist.

19. Nabenkörper nach Anspruch 16, **dadurch gekennzeichnet, dass** die Umfangsöffnungen (47, 99) mindestens eines Flansches (45) Stufen (43a, 43b, 43c, 99a, 99b, 99c) aufweisen, deren Querschnittsabmessungen von innen nach außen kleiner werden, und dass der Flansch mindestens einen Absatz (46b) aufweist, der radial eine Öffnung in der Zwischenstufe (43b) erzeugt.

20. Nabenkörper nach Anspruch 16, **dadurch gekennzeichnet, dass** die Querstrebe (71) mit einem Flansch (70) aus einem Stück ist und dass sie mit dem anderen Flansch (69) durch eine Verbindung verbunden ist.

21. Nabenkörper nach Anspruch 16, **dadurch gekennzeichnet, dass** die Befestigungsöffnungen der Speichen (96) eine Kontur mit einem spitzen Winkel haben.

22. Nabenkörper nach Anspruch 16, **dadurch gekennzeichnet, dass** die Öffnungen zur Speichenbefestigung eine Kontur mit einem schmalen Spalt haben.

23. Nabe für ein Speichenrad, umfassend eine Welle und einen Nabenkörper nach einem der Ansprüche 16 bis 21, die frei drehbar um die Welle montiert ist.

24. Speichenrad, umfassend eine Umfangsfelge, eine zentrale Nabe und Speichen zur Verbindung zwischen der Nabe und der Felge, **dadurch gekennzeichnet, dass** die Nabe einen Nabenkörper nach einem der Ansprüche 16 bis 22 aufweist.

## Claims

1. Method for manufacturing a hub shell for a spoked wheel, the hub shell having a central axis of revolution (21, 41) and comprising two flanges for attaching the spokes (34, 35, 45, 58, 59, 69, 70, 79, 80, 84, 85, 105, 106) linked by a tubular connecting spacer (36, 60, 71, 81, 90, 107), the flanges having a central opening, through which the hub shaft can pass, and peripheral openings or cut-outs for attaching the spokes, **characterized in that** it comprises a step of producing at least one element of the hub shell from a profile section (20, 40, 76, 98) which has at least one central cylindrical cut-out (22, 23), and **in that** said profile section is produced by extrusion through a die, said profile section having cut-outs (25, 43, 93, 99, 108) for receiving the spokes or having continuous radial ribs (77).

2. Method according to Claim 1, **characterized in that** the part of the hub obtained from the profile section is a flange.

3. Method according to Claim 1, **characterized in that** the part of the hub obtained from the profile section is the spacer.

4. Method according to one of Claims 1 to 3, **characterized in that** at least one flange and the spacer are machined in one piece from the profile section.

5. Method according to one of Claims 1 to 4, **characterized in that** at least one of the elements, these being a flange (84, 85) and a spacer (90), is machined from a profile section (92) having a continuous splined surface (94) which is machined so as to retain a splined portion (86, 87, 88, 89) on only one part of the length of the element.

6. Method according to one of Claims 1 to 5, **characterized in that** a profile section (20) having a central cut-out (22, 23) and closed peripheral cut-outs (25) is produced.

7. Method according to one of Claims 1, 2 and 4 to 6, **characterized in that** the open-work profile section is machined in the shape of discs (27, 34, 35).

8. Method according to one of Claims 1, 2 and 4 to 6, **characterized in that** an open-work profile section (40, 98) having tiered cut-outs (43, 99) in the shape of a succession of steps (43a, 43b, 43c, 99a, 99b, 99c) is produced.

9. Method according to Claim 8, **characterized in that** the profile section is machined in the shape of tiers (46a, 46b, 46c) corresponding to the steps (43a, 43b, 43c) of the cut-outs (43).

10. Method according to one of Claims 1 to 7, **characterized in that** a profile section (76) having continuous radial ribs (77) is produced.

11. Method according to Claim 10, **characterized in that** the ribs (77) are machined in the shape of protrusions (73) and **in that** cuts oriented in a radial plane are produced in the protrusions.

12. Method according to one of Claims 1 to 11, **characterized in that** a profile section (92) having cut-outs (93) the contour of which has at least one acute angle is produced.

13. Method according to one of Claims 1 to 11, **characterized in that** an open-work profile section (98) having peripheral zigzag-shaped cut-outs (99) is produced.

14. Method according to one of Claims 1 to 11, **characterized in that** a profile section having peripheral, cross-sectionally rectangular cut-outs is produced.

15. Method according to any one of Claims 1 to 14, **characterized in that** the profile section is produced from an aluminium alloy.

16. Hub shell for a spoked wheel having a central axis of revolution and comprising two flanges for attaching the spokes (34, 35, 45, 58, 59, 69, 70, 79, 80, 84, 85, 105, 106) linked by a tubular connecting spacer (36, 60, 71, 81, 90, 107), the flanges having a central opening, through which the hub shaft can pass, and peripheral openings or notches for attaching the spokes, **characterized in that** it is obtained by carrying out the method according to any one of the preceding claims.

17. Hub shell according to Claim 16, **characterized in that** the flanges are discs (34, 35, 105, 106) having openings (25, 108) in the shape of a double buttonhole or a rectangle.

18. Hub shell according to Claim 16, **characterized in that** the central opening (22) has radial extensions (23) and **in that** material from the central spacer (36) is present in the central opening and the radial extensions.

19. Hub shell according to Claim 16, **characterized in that** the peripheral openings (47, 99) of at least one flange (45) have steps (43a, 43b, 43c; 99a, 99b, 99c) the cross-sectional dimensions of which get smaller from the inside to the outside, and **in that** the flange has at least one tier (46b) which creates an opening radially in the intermediate step (43b).

20. Hub shell according to Claim 16, **characterized in that** the spacer (71) is in one piece with one flange (70) and **in that** it is joined to the other flange (69) by a joint.

21. Hub shell according to Claim 16, **characterized in that** the spoke attachment openings (96) have a contour having an acute angle.

22. Hub shell according to Claim 16, **characterized in that** the spoke attachment openings have a contour having a narrow slit.

23. Hub for a spoked wheel, comprising a shaft and a hub shell according to any one of Claims 16 to 21, mounted so as to rotate freely about the shaft.

24. Spoked wheel comprising a peripheral rim, a central hub and connecting spokes between the hub and the rim, **characterized in that** the hub has a hub shell according to any one of Claims 16 to 22.
